# EUROPEAN PATENT SPECIFICATION

(11) **EP 2 217 097 B1**
(45) Date of publication and mention of the grant of the patent: **04.05.2011**
(21) Application number: 08860710.6
(22) Date of filing: 21.11.2008
(51) Int. Cl.: A23L 1/40, A23P 1/02

(54) **PROCESS TO PREPARE SEASONING CUBES**
VERFAHREN ZUR HERSTELLUNG VON WÜRZWÜRFELN
PROCÉDÉ DE PRÉPARATION DE CUBES D'ASSAISONNEMENT

(30) Priority: 13.12.2007 EP 07123107
(43) Date of publication of application: 18.08.2010
(73) Proprietor: Unilever N.V., 3013 AL Rotterdam (NL); Unilever PLC, London EC4Y 0DY (GB)
(72) Inventor: GUPTA, Shailendra, NL-3133 AT Vlaardingen (NL)
(74) Representative: Fijnvandraat, Arnoldus
(86) International application number: PCT/EP2008/066003
(87) International publication number: WO 2009/074442

(56) References cited:
- EP-A- 0 780 058
- WO-A-2004/112513
- WO-A-2006/063690
- JP-A- 2002 241 266

## Description

### INTRODUCTION

The present invention relates to a process to prepare seasoning cubes.

### BACKGROUND OF THE INVENTION

For several decades, bouillon cubes are produced around the world for the use as instant food product as well as for seasoning purposes. Recipes may vary regionally, or even within the same region, but mainly comprise most of the following ingredients: salt, sugar, monosodium glutamate, fat, starch, flavours and colours. In the context of this application, solid food concentrates applied for preparing a bouillon, sauce, soup or gravy, or applied for seasoning purposes will be indicated as 'seasoning cube', regardless of its purpose, shape, appearance or content. Besides regionally preferred recipes, also the production process to prepare seasoning cubes may vary from one region to the other, depending on local preferences or production means present. Therefore, differences in parameters as mass, density, hardness and/or consistency and shape of the seasoning cubes may be observed among regions and even between factories.

Besides this variation owing to recipes and production machineries, variation among products may also have unwanted causes. The quality of seasoning cubes may depend on the quality of the raw materials used. But also physical properties such as the particle size of the respective ingredients, their mass and the humidity may influence the behaviour of the ingredients during the production process of the seasoning cube. Variation in these parameters may result in variation in the product quality, even within a single production plant. Examples of this kind of problems are e.g. separation of the mixture of ingredients and caking of the ingredients, e.g. due to the hygroscopic character, during transport and production of the seasoning cubes and sticking of the ingredients to the production machinery. In general, a constant quality of a seasoning cube within a single production machinery is desired.

A conventional process to produce seasoning cubes can be summarised as follows. Ingredients like salt, sugar, monosodium glutamate (crystalline ingredients), and furthermore starch, flavours and/or colours (non-crystalline ingredients) are mixed. In general, fat which is used as a binding agent, is molten and added during mixing of the crystalline ingredients. In addition, an anti-caking agent such as Syloid (trademark from W.R. Grace & Co) (silica oxide) is often added. After addition of the fat to the crystalline ingredients, the non-crystalline ingredients are mixed into the mass of ingredients. The fat sticks the crystalline and non-crystalline ingredients together, forming big lumps. After mixing, the mixture is allowed to cool down from a temperature of e.g. between 40-60°C, to solidify the fat. This so-called maturation step may take about 20-30 hours. The formed cake is then crushed and sieved. Subsequently, the sieved particles are pressed to seasoning cubes and packaged.

Conventional processes to prepare seasoning cubes entail several problems. A problem observed in the traditional process to prepare seasoning cubes is the inefficient maturation step. Maturation requires a considerable amount of time during production and a considerable amount of space at the production plant. A further problem is that during the production process the ingredients are prone to caking, especially when no anti-caking agent is added. Caking of ingredients may result in separation of the ingredient mixture and lower efficiency of production due to possible stoppage in the production line of the seasoning cubes. The resulting cubes may show variation in composition and the production machinery may need to be cleaned regularly to guarantee proper function. The presence of an anti-caking agent, however, is not desired for reasons of cost and as this may have a negative consumer appeal. Moreover, the cubes resulting from the conventional process require a significant amount of fat to stick the ingredients together, which may be considered unhealthy by the consumer.

PCT Application WO-A-2006/063690 describes a process for preparing seasoning cubes.

Accordingly, there is a need in the art for a process to prepare seasoning cubes, wherein the maturation time is reduced or preferably wherein no maturation step is required anymore. There is a need in the art for a process wherein a reduced amount of anti-caking agent is present compared to a conventional process, preferably, where no anti-caking agent is present, but wherein ingredients used in the process show a flowability comparable to or higher than the flowability observed when an anti-caking agent is used. Preferably, there is a need for a process requiring a reduced, preferably a limited amount of fat, in case a fat-containing cube is produced, but still allowing production of cubes firm enough to package them, but still allowing the cubes to be easily crumbled by hand. It is further preferred that the cubes can be made using a conventional pressing machinery.

### Summary of the invention

These problems have, at least partly, been solved by a process to prepare seasoning cubes, the cubes comprising
- At least 35 wt.%, preferably at least 50 wt%, and less than 85 wt.%, preferably less than 75 wt.%, based on the mass of the cubes, of crystalline ingredients comprising at least one of salt, monosodium glutamate and sugar and further comprising
- at least 5 wt.%, preferably at least 8 wt.% and less than 35 wt.%, preferably less than 30 wt.%, based on the mass of the cubes, of non-crystalline ingredients comprising at least starch,
- at least 5 wt.%, preferably at least 8 wt.%, and less than 35 wt.%, preferably less than 20 wt.%, based on the mass of the cubes of at least one of the group of fat, liquid polyol and water,
   the process comprising the steps of:
   (a) mixing at least part of the non-crystalline ingredients with the at least one of the group of fat, liquid polyol and water,
   (b) granulating the product resulting from step (a), wherein at least 80 wt.% of the resulting mass is in a granular form,
   (c) mixing at least part of the product resulting from step (b) with at least part of the crystalline ingredients,
   (d) shaping the mixture resulting from step (c) to cubes or tablets.

### Detailed description of the invention

In a first step (a) of the process according to the present invention, non-crystalline ingredients are mixed with fat, a liquid polyol or water or a combination of them. The process of the invention requires an amount of at least 5 wt.% and less than 35wt.% of non-crystalline ingredients to be present, based on the weight of the seasoning cube. Non-crystalline ingredients are intended to mean e.g. starch, flour (which may contain starch), herbs, including herb powders, such as e.g. garlic powder or red bell pepper powder, concentrates and extracts of herbs, and further spices, including powders, concentrates and extracts of spices, and further (powdered) meat extracts, like e.g. chicken, pork or beef, flavours, flavouring oils, vegetable extracts and/or colouring agents. For calculating amounts, the fat, water or liquid polyol is not considered her as part of the "non-crystalline ingredients". Not all non-crystalline ingredients as mentioned above need to be present in a seasoning cube as produced by the process of the invention. Starch may preferably be present in an amount of 2-15 wt.%. In the present application, "starch" is intended also to comprise maltodextrin, as a type of starch. When besides starch the non-crystalline ingredients herbs and spices are present in a seasoning cube, starch, herbs and spices are preferably present in the following respective amounts: starch: 2-15 wt.%, herbs: 2-30 wt.%, spices: 2-20 wt.%, based on the weight of the seasoning cube. Starch may be present as the only non-crystalline ingredient in the cube, but a combination of more non-crystalline ingredients is also possible.
Therefore, in a preferred aspect, the invention relates to a process to prepare seasoning cubes comprising as non-crystalline ingredients at least starch in an amount of from at least 2 wt.%, preferably at least 5 wt.% and less than 15 wt.%, preferably less than 10 wt.% and further optionally comprising at least one of the following non-crystalline ingredients in the respective amounts of

| | |
|---|---|
| -Spices: | at least 2 wt.% and less than 20 wt.%, |
| -Herbs: | at least 2 wt.% and less than 30 wt.%. |

Within the indicated ranges, the amount of these ingredients may vary according to regional preferences.

As described above, at least part of the non-crystalline ingredients comprises starch. Garlic powder is a preferred spice. Optimal granulation effects appeared to be reached when a considerable part of the non-crystalline ingredients comprised starch or garlic or a mixture thereof, preferably, when a considerable part comprises starch. Hence, in a preferred aspect, the present invention relates to a process according to the invention, wherein the amount of starch is 40%wt-100%wt, preferably 50%wt-90%wt, more preferably 60% wt -80% wt, based on the weight of the non-crystalline ingredients.

The invention further relates to a process of the invention, wherein the non-crystalline ingredients further comprise garlic powder, and wherein the total amount of starch and garlic powder taken together is 40%wt-100%wt, preferably 50%wt-90%wt, more preferably 60% wt -80% wt, based on the weight of the non-crystalline ingredients.

The fat, liquid polyol and/or water is intended to stick the non-crystalline ingredients together. The fat, liquid polyol and/or water is added to the non-crystalline ingredients before granulation takes place, and is properly mixed with the non-crystalline ingredients. In case a liquid polyol is used, the liquid polyol is intended to be an edible liquid polyol, preferably being glycerol.

Fat is the preferred material to stick the non-crystalline ingredients together. Fat is conventionally used in bouillon cubes. It provides a taste and flavour common in bouillon cubes and aromatic, flavouring compounds may dissolve better in fat than in e.g. water. In case fat is used, the fat is preferably a vegetable fat, such as e.g. palm oil stearin, but also fats from animals such as pork, chicken, and/or beef are within the scope of the present invention. The fat preferably comprises triglycerides. Fat is also intended to mean oil, such as e.g. olive oil or palm oil. Preferably, fats are used which are solid at ambient temperature. To enable proper mixing of the fat with the non-crystalline ingredients, the fat is preferably liquid during processing. It might be necessary that a melting step is required, e.g. to a temperature of e.g. 40-60°C, e.g. about 50°C. The fat, liquid polyol and/or water may be added by pouring it over a bed of non-crystalline ingredients or by mixing it into the non-crystalline ingredients.

The amount of fat, liquid polyol and/or water present in the particles of non-crystalline ingredients is preferably one third of the weight of the non-crystalline ingredients. Therefore, in a preferred aspect, the invention relates to a process wherein in step (a) at least 10 wt.%, preferably at least 15 wt.%, more preferably at least 20 wt.% and less then 40 wt.%, preferably less than 35 wt.%, more preferably less than 30wt.% of at least one of the group of fat, liquid polyol and/or water is mixed with the non-crystalline ingredients, based on the weight of the granules comprising the non-crystalline ingredients and the fat, liquid polyol and/or water. Since during step (a) the amount of fat, liquid polyol and/or water is mixed into the non-crystalline ingredients only, and not into the crystalline fraction, a smaller amount of fat, liquid polyol and/or water may be used compared to a conventional process and provides sufficient binding effect compared to the amount used in a conventional process. A reduction in fat may be possible of 1 to 2 %.

Although a fat-free product may be produced (using a liquid polyol or water as a binding material), it may be preferred to have at least a small amount of fat present for reasons of taste and/or consumer appeal. Such an amount may be e.g. from 2-5%wt., based on the total cube.

In a preferred aspect, the invention relates to a process according to the invention, wherein in step (a) the fat, liquid polyol and/or water is added to the non-crystalline ingredients by spraying the fat, liquid polyol and/or water onto the non-crystalline ingredients. To this end, the fat (when applied) may be molten up to a temperature of e.g. 40-60°C, preferably of about 50°C to enable proper spraying. This might be done by e.g. heat tracing. The drop size is preferably in the range of from at least 200 µm and less than about 600 µm, preferably at least 300 µm and less than about 500 µm. The fat, liquid polyol and/or water is preferably applied as a monolayer. The spray equipment may be a pneumatic pressure based system, applying pneumatic atomization, using a liquid pressure of from 0 bar up to e.g. 3 bar, e.g. 1 bar (g), and an air pressure of from e.g. 0 bar up to 6 bar, e.g. 2.5 bar (g) may be used. Also higher pressures may be used when desired. Alternatively, a single substance atomization may be used. After spraying, the non-crystalline ingredients are further mixed. By spraying, the time required to carry out the process may be reduced, as a shorter maturation time of the fat may be required.

According to step (b) of the process of the invention, the mixture resulting from step (a) of non-crystalline ingredients and at least one of fat, liquid polyol and/or water is granulated. This formation of granules is however not limited to the process of granulation. Granulation is intended to mean all processes suitable to prepare granules, like e.g. low shear granulation, such as fluidised bed granulation, high shear granulation, such as plough share mixer granulation, compaction, extrusion, or agglomeration, or, if possible, a combination thereof. Therefore, the invention relates to a process wherein the granulation of step (b) is performed by at least one of the methods of low shear granulation, such as fluidised bed granulation, the method of high shear granulation, such as plough share mixer granulation, the method of compaction, extrusion, agglomeration, or a combination thereof. Depending on the granulation and/or mixing method used, the granulation step (b) can be carried out simultaneously with the mixing step of step (a). This is the case e.g. when Plough-share mixing is used. Plough share mixing results in a granular structure of the mixture, rendering an additional granulation step (b) redundant. When spraying is used to apply fat, a liquid polyol or water, steps (a) and (b) may be combined as well, as spraying may result already in a granular texture of the mixture.

According to the invention, the product resulting from step (a) is granulated, such that after the granulation step at least 80% wt. of the resulting mass is in a granular form.

After granulation of the product resulting from step (a) during step (b), an optional sieving step may be applied. In this way a desired range of the dimension of the granules resulting from step (b) may be obtained. This may be relevant, as a large variation in size between crystals and granules of non-crystalline material may cause segregation of the mixture. Preferably, a fraction is obtained with a mesh size of at least 0.3 mm, preferably of at least 0.5 mm, and smaller than 4 mm, preferably smaller than 2 mm, even more preferably, smaller than 1 mm. Therefore, in a preferred aspect, the invention relates to a process, wherein at least 60%, preferably at least 80 wt.% of the granules as produced in step (b) have a size of at least 0.3 mm, preferably at least 0.5 mm and less than 4 mm, preferably less than 2 mm, as measured by sieve analysis.

In step (c) of the process according to the present invention, the granules resulting from step (b) are mixed with the crystalline ingredients. The crystalline ingredients comprise at least one of salt, sugar and monosodium glutamate. Salt is intended to mean an edible salt, such as NaCl, or a salt replacer, preferably a lower alkaline metal salt, such as KCI.

Sugar may be any sugar that is suitable for savoury purposes when applied in the indicated amount, such as e.g. sucrose, sorbitol or glucose. Mixing may be carried out by an ordinary mixing apparatus, such as e.g. a Plough share mixer (Trademark from Lödige).

Not all types of crystalline or non-crystalline ingredients as mentioned above need to be present in a seasoning cube as produced by the process of the invention.

However, when the ingredients salt, sugar and/or monosodium glutamate are present in a seasoning cube, they are preferably present in the following respective amounts: salt: 20-70 wt.%, monosodium glutamate: 5-45 wt.%, sugar: 5-20 wt.%, based on the weight of the seasoning cube. Therefore, in a preferred aspect, the invention relates to a process wherein the crystalline ingredients comprise at least one of the following, in the respective amounts of

| | |
|---|---|
| -Salt | at least 20 wt.% and less than 70 wt.%, |
| -Monosodium glutamate: | at least 5 wt.% and less than 45 wt.%, |
| -Sugar: | at least 5wt.% and less than 20 wt.%. |

Preferably, in the present invention the crystalline ingredients comprise at least two, more preferably at least three of salt, monosodium glutamate and sugar in the indicated respective amounts. When the crystalline and the non-crystalline ingredients have been mixed, the mixture resulting from step (c) of the process is shaped to cubes or tablets (step d). The product as resulting from the process of the invention is not limited to a cubical or rectangular form. Therefore, in the present description "cube" is intended to comprise other forms like e.g. the form of a bar, block, brick, cylinder, pyramid, tetraeder, cone, ball or other three-dimensional (regular or irregular) shapes.

In a preferred aspect of the present invention the shaping in step (d) of the process is performed by pressing. In this way a solid product is obtained, e.g. in the form of a tablet or a cube. Pressing preferably is carried out by a standard process as known in the art, by using a mould, such as e.g. an apparatus from Instron, Bonals or Kilian (all trademarks). Besides pressing, the shaping may also be carried out by other techniques, such as e.g. extrusion, roller compaction, cutting or sheeting, or a possible combination of them. Therefore, in a preferred aspect, the invention relates to a process wherein the shaping in step (d) of the process comprises pressing, extrusion, cutting, sheeting or roller compacting or a combination between at least two of them.

Preferably, the cube has a weight of from at least 2 grams, preferably of at least 5 grams and less than 15 grams, preferably less than 12 grams, more preferably less than 7 grams.

It is desired that by the process according to the invention a seasoning cube is obtained that is firm. This means that the seasoning cube does not easily break or crumble during the packaging or transport procedures. However, it is desired that when the product is used by the consumer, it may crumble relatively easily by applying hand force. In this way the crumbled product can be dispensed easily during and/or after cooking and/or dissolves relatively fast in watery solutions.

The process according to the invention shows several advantages. As the non-crystalline ingredients are granulated and function now as carrier of the fat, liquid polyol and/or water, the flowability of the ingredients, especially of the non-crystalline ingredients has been improved considerably. The process of the invention reduces the need for an anti-caking agent, such as silicia dioxide, responsible for e.g. 7-9% of the costs of a seasoning cube. Grinding of a cake of ingredients, resulting from the mixture of solidified fat and further ingredients, is not necessary anymore. Therefore the presence of lumps of material with an irregular shape contributing to obstructions in the process machinery is reduced. Applying fat, water and/or liquid polyol by spraying, is a convenient and time-efficient way to produce granules of non-crystalline material and the fat, liquid polyol and/or water.

An other advantage is that the current process allows the use of a higher amount of taste-imparting ingredients such as e.g. herb- and/or vegetable powder, as a lower amount of binder material may be required, leaving space for more non-crystalline ingredients, making the recipe formulation more flexible.

The invention will be exemplified by the following example.

### Example 1.

Ingredient mixtures for seasoning cubes where prepared according to a conventional recipe comprising Syloid as an anti-caking agent and by using a conventional process (Comparative Example 1 a). In addition, a mixture was prepared according to a conventional process, but in the absence of Syloid (Comparative Example 1 b). Finally, a mixture was prepared without Syloid (same as Comp. Example 1 b), but according to the process of the invention (Example 1 c).

A standard recipe for conventional garlic seasoning cubes was used (comparative Example 1 a). This recipe comprised the following ingredients:

| | | |
|---|---|---|
| Crystalline | salt | 43 wt.%, |
| | monosodium glutamate | 16 wt.%, |
| | sugar | 11 wt.%, |
| Non-crystalline: | corn starch | 7 wt.%, |
| | garlic powder | 11 wt.%, |
| | silica oxide (Syloid) | 2 wt.%, |
| palm oil stearin: | | 10 wt.%, |

A second recipe was used without Syloid, (Examples 1 b and 1 c). To compensate for the reduction in Syloid, the amount of the other ingredients was increased proportionally. This resulted in a ingredient composition for Example 1 c comprising:

| | | |
|---|---|---|
| Crystalline | salt | 43.9 wt.%, |
| | monosodium glutamate | 16.3 wt.%, |
| | sugar | 11.2. wt.%, |
| Non-crystalline: | corn starch | 7.2 wt.%, |
| | garlic powder | 11.2 wt.%, |
| | syloid | 0 wt% |
| palm oil stearin: | | 10.2 wt.%, |

### Preparation of the mixture according to the invention (Example 1 c):

Mixing (step a) and granulation (step b) of garlic and starch with the palm oil stearin was carried out at high rotor speed with chopper blade on in a Plough-share mixer, which did not have a liquid spray system installed. Palm oil stearin was added using a funnel. The time allowed for granulation was approximately 6 minutes.

This resulted in spherical granules with a particle size distribution of around 30% of the granules being in a range of from 2 to 4 mm, about 60% of the particles being in a range of from 0.5 to 1 mm, and the remainder being smaller than 0.5 mm. The sieved fraction of form 0.5 to 1 mm showed the most homogenous distribution compared to the other fractions. In the rest of the experiment the mixture comprising the sieved fraction of 0.5-1 mm was used.

The flowability of the mix with 0.5 mm-1 mm granules was measured by ring-shear cell, as known by a person skilled in the art. Results are shown in the table below. The flowability index is measured as the force per area that is needed to shear the product in the ring-shear cell. On a scale from 0-10, 0 indicates that it is a very sticky mass, whereas 10 indicates that the product is very flowable.

**TABLE**

| **Nr.** | **Material** | **Flowability index** | **Water activity** |
|---|---|---|---|
| Comp. ex. 1a | With Syloid | 5.1 | 0.35 |
| Comp. ex. 1b | No Syloid | 2.1 | 0.39 |
| Example 1c | No Syloid | 6.1 | 0.46 |

Comparative examples 1 a and 1 b show that omission of a standard anti caking agent reduces flow-ability of the material from 5.1 to 2.1.

When no anti-caking agent (Syloid) is used but when the non-crystalline ingredients were granulated with the palm oil stearin (according to the process of the invention), a flowability was obtained that was even higher than when Syloid was present (Example 1 c). These examples show that granulation of the non-crystalline ingredients in the preparation process results in a flowability of the ingredients that is at least comparable to, or even higher than the flowability observed when an anti-caking agent (Comp. example 1 a) was used.

It is important to note that the sample as prepared according to the invention (Example 1 c) which showed highest flowability (6.1), surprisingly was also the sample with the highest water activity (0.46). High water activity is known to reduce flowability of material. This makes the present invention especially advantageous for application in factories located in regions with high relative air humidity. It is expected that maintaining the water activity to the lower controlled level (0.33) as normally desired in a factory would increase flowability even more.

The mixture was then mixed with the crystalline ingredients (step c) and compressed to cubes with a dimension of 14x14x14 mm using an Instron^{™} compression apparatus with 10 KN load cell and with a speed of 10mm/sec (step d).

### Example 2.

| | | |
|---|---|---|
| Crystalline: | salt | 44 wt.% |
| | MSG | 12 wt.% |
| | Sugar | 9 wt.% |
| Non-crystalline: | corn starch | 21.25 wt.% |
| | Maltodextrin | 3 wt.% |
| | Flavour | 2.15 wt.% |
| | Colouring | 0.3 wt.% |
| Palm oil stearin: | | 8.3 wt.% |

### Example 3.

| | | |
|---|---|---|
| Crystalline: | salt | 44 wt.% |
| | MSG | 12 wt.% |
| | Sugar | 9 wt.% |
| Non-crystalline: | corn starch | 9.9 wt.% |
| | Curry powder | 9.9 wt.% |
| | Maltodextrin | 2.15 wt.% |
| | Colouring | 2.45 wt.% |
| Palm oil stearin: | | 10.6 wt.% |

Examples 2 and 3 were prepared without Syloid according to the method of Example 1.

## Claims

1. Process to prepare seasoning cubes, the cubes comprising
- at least 35 wt.%, preferably at least 50 wt%, and less than 85 wt.%, preferably less than 75 wt.%, based on the mass of the cubes, of crystalline ingredients comprising at least one of salt, monosodium glutamate and sugar and further comprising
- at least 5 wt.%, preferably at least 8 wt.% and less than 35 wt.%, preferably less than 30 wt.%, based on the mass of the cubes, of non-crystalline ingredients comprising at least starch,
- at least 5 wt.%, preferably at least 8 wt.%, and less than 35 wt.%, preferably less than 20 wt.%, based on the mass of the cubes of at least one of the group of fat, liquid polyol and water,
the process comprising the steps of:
(a) mixing at least part of the non-crystalline ingredients with the at least one of the group of fat, liquid polyol and water,
(b) granulating the product resulting from step (a), wherein at least 80 wt.% of the resulting mass is in a granular form,
(c) mixing at least part of the product resulting from step (b) with at least part of the crystalline ingredients,
(d) shaping the mixture resulting from step (c) to cubes or tablets.

2. Process according to claim 1, wherein the non-crystalline ingredients comprise at least starch in an amount of from at least 2 wt.%, preferably at least 5 wt.% and less than 15 wt.%, preferably less than 10 wt.% and further optionally comprise at least one of the following non-crystalline ingredients in the respective amounts of
| | |
|---|---|
| -Spices: | at least 2 wt.% and less than 20 wt.%, |
| -Herbs: | at least 2 wt.% and less than 30 wt.%. |

3. Process according to claim 1 or 2 wherein the crystalline ingredients comprise at least one of the following, in the respective amounts of
| | |
|---|---|
| -Salt: | at least 20 wt.% and less than 70 wt.%, |
| -Monosodium glutamate: | at least 5 wt.% and less than 45 wt.%, |
| -Sugar: | at least 5wt.% and less than 20 wt.%. |

4. Process according to claim 1, wherein in step (a) at least 10 wt.%, preferably at least 15 wt.%, more preferably at least 20 wt.% and less then 40 wt.%, preferably less than 35 wt.%, more preferably less than 30wt.% of the group of fat, liquid polyol and water is mixed with the non-crystalline ingredients, based on the weight of the granules comprising the non-crystalline ingredients and the fat, liquid polyol and/or water.

5. Process according to any of the preceding claims, wherein the amount of starch is 40%wt-100%wt, based on the weight of the non-crystalline ingredients.

6. Process according to any of the preceding claims, wherein the non-crystalline ingredients further comprise garlic powder, and wherein the total amount of starch and garlic powder taken together is 40%wt-100%wt, based on the weight of the non-crystalline ingredients.

7. The process according to any of the preceding claims, wherein in step (a) the fat, liquid polyol and/or water is added to the non-crystalline ingredients by spraying the fat, liquid polyol and/or water onto the non-crystalline ingredients.

8. The process according to any of the preceding claims, wherein the granulation of step (b) is performed by at least one of the method of low shear granulation, such as fluidised bed granulation, the method of high shear granulation, such as plough share mixer granulation, the method of compaction, extrusion, agglomeration, or a combination thereof.

9. The process according to any of the preceding claims, process, wherein at least 60 %wt., preferably 80 wt.% of the granules as produced in step (b) have a size of at least 0.3 mm, preferably at least 0.5 mm and less than 4 mm, preferably less than 2 mm, as measured by sieve analysis.

10. The process according to any of the preceding claims, wherein the shaping in step (d) of the process comprises pressing, extrusion, cutting, sheeting or roller compacting or a combination between at least two of them.

11. The process according to any of the preceding claims, wherein the shaping in step (d) of the process comprises pressing.

## Patentansprüche

1. Verfahren zur Herstellung von Würzmittelwürfeln, wobei die Würfel umfassen:
- wenigsten 35 Gew.-%, vorzugsweise wenigstens 50 Gew.-%, und weniger als 85 Gew.-%, vorzugsweise weniger als 75 Gew.-%, bezogen auf die Masse der Würfel, kristalline Ingredienzien, umfassend wenigstens eines von Salz, Mononatriumglutamat und Zucker und außerdem umfassend
- wenigstens 5 Gew.-%, vorzugsweise wenigstens 8 Gew.-% und weniger als 35 Gew.-%, vorzugsweise weniger als 30 Gew.-%, bezogen auf die Masse der Würfel, nicht-kristalline Ingredienzien, die wenigstens Stärke umfassen,
- wenigstens 5 Gew.-%, vorzugsweise wenigstens 8 Gew.-% und weniger als 35 Gew.-%, vorzugsweise weniger als 20 Gew.-%, bezogen auf die Masse der Würfel, wenigstens eines aus der Gruppe von Fett, flüssigem Polyol und Wasser,
wobei das Verfahren die Schritte:
(a) Mischen wenigstens eines Teils der nicht-kristallinen Ingredienzien mit dem wenigstens einen aus der Gruppe von Fett, flüssigem Polyol und Wasser,
(b) Granulieren des Produktes, das aus Schritt (a) resultiert, wobei wenigstens 80 Gew.-% der resultierenden Masse in granulärer Form sind,
(c) Mischen wenigstens eines Teils des Produkts, das aus Schritt (b) resultiert, mit wenigstens einem Teil der kristallinen Ingredienzien,
(d) Formen des Gemisches, das aus Schritt (c) resultiert, zu Würfeln oder Tabletten umfasst.

2. Verfahren gemäß Anspruch 1, wobei die nicht-kristallinen Ingredienzien wenigstens Stärke in einer Menge von wenigstens 2 Gew.-%, vorzugsweise wenigstens 5 Gew.-% und weniger als 15 Gew.-%, vorzugsweise weniger als 10 Gew.-% umfassen und außerdem gegebenenfalls wenigstens eines der folgenden nicht-kristallinen Ingredienzien in den entsprechenden Mengen umfassen
| | |
|---|---|
| - Gewürze: | wenigstens 2 Gew.-% und weniger als 20 Gew.-%, |
| - Kräuter: | wenigstens 2 Gew.-% und weniger als 30 Gew.-%. |

3. Verfahren gemäß Anspruch 1 oder 2, wobei die kristallinen Ingredienzien wenigstens eines der folgenden in den entsprechenden Mengen umfassen:
| | |
|---|---|
| - Salz: | wenigstens 20 Gew.-% und weniger als 70 Gew.-%, |
| - Mononatriumglutamat: | wenigstens 5 Gew.-% und weniger als 45 Gew.-%, |
| - Zucker: | wenigstens 5 Gew.-% und weniger als 20 Gew.-%. |

4. Verfahren gemäß Anspruch 1, wobei in Schritt (a) wenigstens 10 Gew.-%, vorzugsweise wenigstens 15 Gew.-%, bevorzugter wenigstens 20 Gew.-% und weniger als 40 Gew.-%, vorzugsweise weniger als 35 Gew.-%, bevorzugter weniger als 30 Gew.-% der Gruppe aus Fett, flüssigem Polyol und Wasser mit den nicht-kristallinen Ingredienzien vermischt werden, bezogen auf das Gewicht des Granulats, das die nicht-kristallinen Ingredienzien und das Fett, flüssiges Polyol und/oder Wasser umfasst.

5. Verfahren gemäß einem der vorangehenden Ansprüche, wobei die Stärkemenge 40 Gew.-% bis 100 Gew.-%, bezogen auf das Gewicht der nicht-kristallinen Ingredienzien, ist.

6. Verfahren gemäß einem der vorangehenden Ansprüche, wobei die nicht-kristallinen Ingredienzien außerdem Knoblauchpulver umfassen und wobei die Gesamtmenge an Stärke und Knoblauchpulver zusammengenommen 40 Gew.-% bis 100 Gew.-%, bezogen auf das Gewicht der nicht-kristallinen Ingredienzien, ist.

7. Verfahren gemäß einem der vorangehenden Ansprüche, wobei in Schritt (a) das Fett, das flüssige Polyol und/oder Wasser zu den nicht-kristallinen Ingredienzien gegeben werden, indem das Fett, flüssige Polyol und/oder Wasser auf die nicht-kristallinen Ingredienzien gesprüht werden.

8. Verfahren gemäß einem der vorangehenden Ansprüche, wobei die Granulierung von Schritt (b) durch wenigstens eines von dem Verfahren mit Niederschergranulierung, zum Beispiel Wirbelbettgranulierung, dem Verfahren mit Hochschergranulierung, zum Beispiel Granulierung mit Pflugscharmischer, dem Kompaktierungs-, Extrudier-, Agglomerationsverfahren oder einer Kombination davon durchgeführt wird.

9. Verfahren gemäß einem der vorangehenden Ansprüche, wobei wenigstens 60 Gew.-%, vorzugsweise 80 Gew.-% des Granulats, wie es in Schritt (b) produziert wird, eine Größe von wenigstens 0,3 mm, vorzugsweise wenigstens 0,5 mm, und weniger als 4 mm, vorzugsweise weniger als 2 mm, wie sie durch Siebanalyse gemessen wird, haben.

10. Verfahren gemäß einem der vorangehenden Ansprüche, wobei das Formen in Schritt (d) des Verfahrens Verpressen, Extrudieren, Schneiden, Folienbildung oder Walzenkompaktierung oder eine Kombination von wenigstens zwei von diesen umfasst.

11. Verfahren gemäß einem der vorangehenden Ansprüche, wobei das Formen in Schritt (d) des Verfahrens ein Verpressen umfasst.

## Revendications

1. Procédé de préparation de cubes d'assaisonnement, les cubes comprenant
- au moins 35 % en poids, de préférence au moins 50 % en poids, et moins de 85 % en poids, de préférence moins de 75 % en poids, sur la base de la masse des cubes, d'ingrédients cristallins comprenant au moins un composé du sel, du glutamate monosodique et du sucre, et comprenant en outre
- au moins 5 % en poids, de préférence au moins 8 % en poids et moins de 35 % en poids, de préférence moins de 30 % en poids, sur la base de la masse des cubes, d'ingrédients non cristallins comprenant au moins de l'amidon,
- au moins 5 % en poids, de préférence au moins 8 % en poids et moins de 35 % en poids, de préférence moins de 20 % en poids, sur la base de la masse des cubes, d'au moins un composé choisi dans le groupe des matière grasse, polyol liquide et eau,
le procédé comprenant les étapes de :
(a) mélange d'au moins une partie des ingrédients non cristallins avec au moins un composé choisi dans le groupe des matière grasse, polyol liquide et eau,
(b) granulation du produit résultant de l'étape (a), dans lequel au moins 80 % en poids de la masse résultante est sous une forme granulaire,
(c) mélange d'au moins une partie du produit résultant de l'étape (b) avec au moins une partie des ingrédients cristallins,
(d) façonnage du mélange résultant de l'étape (c) en cubes ou pastilles.

2. Procédé selon la revendication 1, dans lequel les ingrédients non cristallins comprennent au moins de l'amidon en une quantité d'au moins 2 % en poids, de préférence d'au moins 5 % en poids et de moins de 15 % en poids, de préférence de moins de 10 % en poids et comprennent en outre facultativement au moins l'un des ingrédients non cristallins suivants dans les quantités respectives de
épices au moins 2 % en poids et moins de 20 % en poids,
herbes au moins 2 % en poids et moins de 30 % en poids.

3. Procédé selon la revendication 1 ou 2, dans lequel les ingrédients cristallins comprennent au moins l'un des composés suivants, dans les quantités respectives de
sel au moins 20 % en poids et moins de 70 % en poids,
glutamate monosodique au moins 5 % en poids et moins de 45 % en poids,
sucre au moins 5 % en poids et moins de 20 % en poids.

4. Procédé selon la revendication 1, dans lequel dans l'étape (a) au moins 10 % en poids, de préférence au moins 15 % en poids, plus préférablement au moins 20 % en poids et moins de 40 % en poids, de préférence moins de 35 % en poids, plus préférablement moins de 30 % en poids du groupe des matière grasse, polyol liquide et eau, est mélangé avec les ingrédients non cristallins, sur la base du poids des granules comprenant les ingrédients non cristallins et la matière grasse, le polyol liquide et/ou l'eau.

5. Procédé selon l'une quelconque des revendications précédentes, dans lequel la quantité d'amidon est de 40 % en poids à 100 % en poids, sur la base du poids des ingrédients non cristallins.

6. Procédé selon l'une quelconque des revendications précédentes, dans lequel les ingrédients non cristallins comprennent en outre de l'ail en poudre, et dans lequel la quantité totale d'amidon et d'ail en poudre ensemble est de 40 % en poids à 100 % en poids, sur la base du poids des ingrédients non cristallins.

7. Procédé selon l'une quelconque des revendications précédentes, dans lequel dans l'étape (a), la matière grasse, le polyol liquide et/ou l'eau est ajouté aux ingrédients non cristallins par pulvérisation de la matière grasse, du polyol liquide et/ou de l'eau sur les ingrédients non cristallins.

8. Procédé selon l'une quelconque des revendications précédentes, dans lequel la granulation de l'étape (b) est réalisée par au moins l'un des procédés constitués par un procédé de granulation à faible cisaillement, tel qu'une granulation sur lit fluidisé, un procédé de granulation à fort cisaillement, tel que la granulation à l'aide d'un mélangeur à soc, un procédé de compactage, extrusion, agglomération, ou une combinaison de ceux-ci.

9. Procédé selon l'une quelconque des revendications précédentes, dans lequel au moins 60 % en poids, de préférence 80 % en poids des granules produits dans l'étape (b) possèdent une taille d'au moins 0,3 mm, de préférence d'au moins 0,5 mm et de moins de 4 mm, de préférence de moins de 2 mm, comme mesurée par une analyse granulométrique.

10. Procédé selon l'une quelconque des revendications précédentes, dans lequel le façonnage de l'étape (d) du procédé comprend la compression, l'extrusion, le découpage, le laminage ou le compactage au rouleau ou une combinaison d'au moins deux d'entre eux.

11. Procédé selon l'une quelconque des revendications précédentes, dans lequel le façonnage de l'étape (d) du procédé comprend la compression.
